(19) Europäisches Patentamt
European Patent Office
Office européen des brevets

(11) **EP 4 085 385 B1**

(12) **EUROPEAN PATENT SPECIFICATION**

(45) Date of publication and mention of the grant of the patent:
**11.09.2024 Bulletin 2024/37**

(21) Application number: **21704258.9**

(22) Date of filing: **08.02.2021**

(51) International Patent Classification (IPC):
**G06N 3/092** (2023.01)    **G06N 3/045** (2023.01)

(52) Cooperative Patent Classification (CPC):
**G06N 3/045; G06N 3/092**

(86) International application number:
**PCT/EP2021/052983**

(87) International publication number:
**WO 2021/156513 (12.08.2021 Gazette 2021/32)**

(54) **GENERATING IMPLICIT PLANS FOR ACCOMPLISHING GOALS IN AN ENVIRONMENT USING ATTENTION OPERATIONS OVER PLANNING EMBEDDINGS**

ERZEUGUNG VON IMPLIZITEN PLÄNEN ZUR ERREICHUNG VON ZIELEN IN EINER UMGEBUNG UNTER VERWENDUNG VON AUFMERKSAMKEITSOPERATIONEN ÜBER PLANUNGSEINBETTUNGEN

GÉNÉRATION DE PLANS IMPLICITES POUR ACCOMPLIR DES OBJECTIFS DANS UN ENVIRONNEMENT À L'AIDE D'OPÉRATIONS D'ATTENTION SUR DES INTÉGRATIONS DE PLANIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2020 US 202062971444 P**

(43) Date of publication of application:
**09.11.2022 Bulletin 2022/45**

(73) Proprietor: **DeepMind Technologies Limited London EC4A 3TW (GB)**

(72) Inventors:
• **RITTER, Samuel**
  **London N1C 4AG (GB)**
• **FAULKNER, Ryan**
  **London N1C 4AG (GB)**
• **RAPOSO, David Nunes**
  **London N1C 4AG (GB)**

(74) Representative: **Marks & Clerk GST**
**1 New York Street**
**Manchester M1 4HD (GB)**

(56) References cited:
**US-A1- 2019 354 885**

• **MARCIN ANDRYCHOWICZ ET AL: "Hindsight Experience Replay", ARXIV.ORG, CORNELL UNIVERSITY LIBRARY, 201 OLIN LIBRARY CORNELL UNIVERSITY ITHACA, NY 14853, 5 July 2017 (2017-07-05), XP080774610**
• **KUAN FANG ET AL: "Scene Memory Transformer for Embodied Agents in Long-Horizon Tasks", ARXIV.ORG, CORNELL UNIVERSITY LIBRARY, 201 OLIN LIBRARY CORNELL UNIVERSITY ITHACA, NY 14853, 9 March 2019 (2019-03-09), XP081131568**

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model. Some machine learning models are deep models that employ multiple layers of models to generate an output for a received input. For example, a deep neural network is a deep machine learning model that includes an output layer and one or more hidden layers that each apply a non-linear transformation to a received input to generate an output.

Fang et al. "Scene Memory Transformer for Embodied Agents in Long-Horizon Tasks", arXiv:1903.03878v1, describes a system in which an embedding of each observation is added to a memory, and in which a policy network applies attention over the memory to produce an action.

SUMMARY

This specification describes an action selection system implemented as computer programs on one or more computers in one or more locations for controlling an agent interacting with an environment to accomplish a goal.

Throughout this specification, an "embedding" of an entity (e.g., an observation of an environment) can refer to a representation of the entity as an ordered collection of numerical values, e.g., a vector or matrix of numerical values. An embedding of an entity can be generated, e.g., as the output of a neural network that processes data characterizing the entity.

According to a first aspect there is provided a method according to the appended independent claim 1.

In implementations the planning embedding does not include a representation of a current observation characterizing a current state of the environment.

The method includes processing the planning embeddings using a planning neural network to generate an implicit plan for accomplishing the goal. The implicit plan may thus comprise an embedding encoding information about the previous interactions of the agent with the environment, and the goal. As described later, it may also depend on a representation of the current observation. It may implicitly characterize actions that can be performed by the agent to accomplish the goal. The planning neural network may be any neural network which is configured to process the planning embeddings, a goal embedding, and in implementations the representation of the current observation. However in implementations the planning neural network may include one or more self-attention layers, as described later.

The method further comprises selecting the action to be performed by the agent at the time step using the implicit plan.

In implementations the method iteratively updates the planning embeddings using attention over the planning embeddings, e.g. using an attention sub-network. Multiple iterations of the same attention, e.g. self-attention, function may be applied over the planning embeddings. The implicit plan may be generated based on the planning embeddings and the current observation. Generating the implicit plan may comprise appending a representation of the current embedding to each planning embedding and processing the combined embedding using one or more neural network layers e.g. self-attention layers, e.g. using the attention sub-network. In implementations these neural network layers do not process the representation of the current observation.

In broad terms using attention involves applying an attention mechanism, e.g. a self-attention mechanism which relates the planning embeddings to one another to determine the implicit plan. Details of attention mechanisms vary, but in general an attention mechanism may map a learned query vector and a learned set of key-value vector pairs to an output. The output may be computed as a weighted sum of the values, with weights dependent on a similarity of the query and key. In a self-attention mechanism of this type the input to the attention mechanism may be a set of planning embeddings and the output may the a transformed version of the same set of planning embeddings. Merely as one example, a dot-product attention mechanism is described in arXiv: 1706.03762 (which also describes an example of multi-head attention). In implementations using (self-)attention facilitates determining relationships amongst past states.

In some implementations using attention over the planning embeddings involves processing the planning embeddings using a residual neural network block (i.e. one that includes a residual or skip connection). The residual neural network block may be configured to apply a sequence of operations to the planning embeddings including a layer normalization operation (see, e.g., arXiv: 1607:06450), an attention operation, and a linear projection operation.

The method may involve training the planning neural network jointly with an action selection using any reinforcement learning technique e.g. by backpropagating gradients of a reinforcement learning objective function. The reinforcement learning objective function may be any suitable objective function e.g. a temporal difference objective function or a policy gradient objective function, e.g. using an actor-critic objective function, dependent upon the rewards received by the agent from the environment in response to the actions.

Particular embodiments of the subject matter described in this specification can be implemented so as to realize one or more of the following advantages.

The system described in this specification can enable an agent to use information learned about an environment to generate "implicit plans" for solving tasks (i.e., accomplishing goals) in the environment. An implicit plan refers to data (e.g., numerical data represented as an ordered collection of numerical values, e.g., a vector or matrix of numerical values) that implicitly characterizes actions that can be performed by the agent to accomplish a task. By selecting actions to be performed by the agent using implicit plans, the system described in this specification can enable the agent to accomplish tasks and explore the environment more efficiently (e.g., by accomplishing tasks and exploring the environment over fewer time steps). That is, the described techniques allow a mix of exploration and goal-directed behavior and at the same time enable the agent to learn to plan over long timescales, such that once trained the agent is able to generalize beyond its training experience. Thus in particular, the system described in this specification can enable an agent to exploit its previously gained knowledge of tasks and environments to efficiently perform new (i.e., previously unseen) tasks in new environments. In one example, the agent may be a consumer robot that performs household tasks (e.g., cleaning tasks), and the system described in this specification may enable the agent to efficiently perform new tasks as the agent is placed in new environments (e.g., different rooms in a house).

The system described in this specification can generate an implicit plan for solving a task by generating planning embeddings based on past interactions of the agent with the environment, and iteratively updating the planning embeddings using attention operations. Iteratively updating the planning embeddings using attention operations allows information to be shared amongst the planning embeddings and thereby facilitates more effective planning which can enable the agent to accomplish tasks and explore the environment more efficiently, e.g., over fewer time steps.

The details of one or more embodiments of the subject matter of this specification are set forth in the accompanying drawings and the description below. Other advantages will become apparent from the description, the drawings, and the claims.

BRIEF DESCRIPTION OF THE DRAWINGS

FIG. 1 is a block diagram of an example action selection system.
FIG. 2 shows an example architecture of a planning neural network that is included in the action selection system.
FIG. 3 is a flow diagram of an example process for selecting actions to be performed by an agent interacting with an environment to accomplish a goal.
FIG. 4 is a schematic illustration of an example of the system of FIG. 1.

Like reference numbers and designations in the various drawings indicate like elements.

DETAILED DESCRIPTION

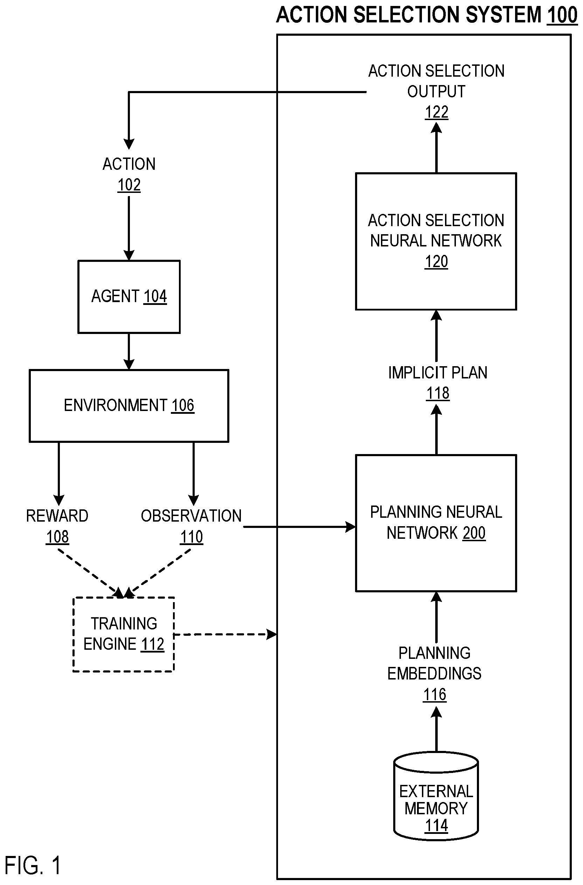

FIG. 1 is a block diagram of an example action selection system 100. The action selection system 100 is an example of a system implemented as computer programs on one or more computers in one or more locations in which the systems, components, and techniques described below are implemented.

The system 100 selects actions 102 to be performed by an agent 104 interacting with an environment 106 at each of multiple time steps to accomplish a goal. At each time step, the system 100 receives data characterizing the current state of the environment 106, e.g., an image of the environment 106, and selects an action 102 to be performed by the agent 104 in response to the received data. Data characterizing a state of the environment 106 will be referred to in this specification as an observation 110. At each time step, the state of the environment 106 at the time step (as characterized by the observation 110) depends on the state of the environment 106 at the previous time step and the action 102 performed by the agent 104 at the previous time step.

At each time step, the system 100 may receive a reward 108 based on the current state of the environment 106 and the action 102 of the agent 104 at the time step. Generally, the reward 108 may be represented a numerical value. The reward 108 can be based on any event in or aspect of the environment 106. For example, the reward 108 may indicate whether the agent 104 has accomplished a goal (e.g., navigating to a target location in the environment 106) or the progress of the agent 104 towards accomplishing a goal.

In some implementations, the environment is a real-world environment and the agent is a mechanical agent interacting with the real-world environment. For example, the agent may be a robot interacting with the environment to accomplish a goal, e.g., to locate an object of interest in the environment, to move an object of interest to a specified location in the environment, to physically manipulate an object of interest in the environment in a specified way, or to navigate to a specified destination in the environment; or the agent may be an autonomous or semi-autonomous land, air, or sea vehicle navigating through the environment to a specified destination in the environment. Then the actions may be actions taken by the mechanical agent in the real-world environment to accomplish the goal, and may include control signals to control the mechanical agent.

In these implementations, the observations may include, for example, one or more of images, object position data, and sensor data to capture observations as the agent interacts with the environment, for example sensor data from an image, distance, or position sensor or from an actuator.

For example in the case of a robot the observations may include data characterizing the current state of the robot, e.g., one or more of: joint position, joint velocity, joint force, torque or acceleration, for example gravity-compensated torque feedback, and global or relative pose of an item held by the robot.

In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations.

The observations may also include, for example, data obtained by one of more sensor devices which sense a real-world environment; for example, sensed electronic signals such as motor current or a temperature signal; and/or image or video data for example from a camera or a LIDAR sensor, e.g., data from sensors of the agent or data from sensors that are located separately from the agent in the environment.

In the case of an electronic agent the observations may include data from one or more sensors monitoring part of a plant or service facility such as current, voltage, power, temperature and other sensors and/or electronic signals representing the functioning of electronic and/or mechanical items of equipment.

The actions may be control inputs to control a robot, e.g., torques for the joints of the robot or higher-level control commands, or the autonomous or semi-autonomous land or air or sea vehicle, e.g., torques to the control surface or other control elements of the vehicle or higher-level control commands.

In other words, the actions can include for example, position, velocity, or force/torque/acceleration data for one or more joints of a robot or parts of another mechanical agent. Actions may additionally or alternatively include electronic control data such as motor control data, or more generally data for controlling one or more electronic devices within the environment the control of which has an effect on the observed state of the environment. For example in the case of an autonomous or semi-autonomous land, air, or sea vehicle the actions may include actions to control navigation e.g. steering, and movement e.g., braking and/or acceleration of the vehicle.

In some other applications the agent may control actions in a real-world environment including items of equipment, for example in a data center or grid mains power or water distribution system, or in a manufacturing plant or service facility. The observations may then relate to operation of the plant or facility. For example the observations may include observations of power or water usage by equipment, or observations of power generation or distribution control, or observations of usage of a resource or of waste production. The agent may control actions in the environment to accomplish the goal of increased efficiency, for example by reducing resource usage, and/or reduce the environmental impact of operations in the environment, for example by reducing waste. The actions may include actions controlling or imposing operating conditions on items of equipment of the plant/facility, and/or actions that result in changes to settings in the operation of the plant/facility e.g. to adjust or turn on/off components of the plant/facility.

In some further applications, the environment is a real-world environment and the agent manages distribution of tasks across computing resources e.g. on a mobile device and/or in a data center. In these implementations, the actions may include assigning tasks to particular computing resources, and the goal to be achieved can include minimizing the time required to complete a set of tasks using specified computing resources.

In any of the above implementations, the observation at any given time step may include data from a previous time step that may be beneficial in characterizing the environment, e.g., the action performed at the previous time step, the reward received at the previous time step, and so on.

The system 100 selects the action to be performed by the agent 104 at each time step using an external memory 114, a planning neural network 200, and an action selection neural network 120, as will be described in more detail next.

The memory 114 stores a respective "experience tuple" corresponding to each of multiple previous time steps (e.g., the memory 114 can store a respective experience tuple for each time step before the current time step). The memory 114 can be implemented, e.g., as a logical data storage area or physical data storage device.

An experience tuple for a time step refers to data that characterizes the interaction of the agent 104 with the environment 106 at the previous time step. For example, an experience tuple for a previous time step can include respective embeddings (representations) of: (i) the observation at the previous time step, (ii) the action performed by the agent at the previous time step, and (iii) the subsequent observation that resulted from the action performed by the agent at the previous time step.

The system 100 can generate an embedding of an observation (e.g., that is included in an experience tuple) by providing the observation to an embedding neural network that is configured to process the observation to generate a corresponding embedding. The system 100 can generate an embedding of an action (e.g., that is included in an experience tuple) by associating the action with a one-hot embedding that uniquely identifies the action from a set of possible actions.

In some implementations, the system 100 clears the memory 114 (i.e., by deleting or overwriting the contents of the memory 114) each time a clearing criterion is satisfied. For example, the clearing criterion can be satisfied if the agent accomplishes the goal in the environment, if the agent is placed in a new environment, or if the memory is full (e.g., because an experience tuple is stored in each available slot in the memory).

To select the action to be performed at a time step, the system 100 generates a respective "planning" embedding 116 corresponding to each of multiple experience tuples stored in the memory 114. The system 100 generates the planning embedding 116 for an experience tuple, e.g., by concatenating an embedding of a "goal" observation to the experience tuple, where the goal observation represents a state of the environment when the goal of the agent has been accomplished. For example, if the goal of the agent is to navigate to a specified location in the environment, then the goal observation may be an observation representing the state of the environment when the agent is located at the specified location. In some other implementations, the system 100 can identify the planning embedding 116 associated with an experience tuple as being a copy of the experience tuple (e.g., such that the planning embeddings 116 and the experience tuples stored in the memory 114 are the same).

The system 100 can generate a respective planning embedding 116 corresponding to each experience tuple stored in the memory 114. Alternatively, the system 100 can generate planning embeddings 116 for only a proper subset of the experience tuples stored in the memory 114, e.g., for only the experience tuples corresponding to a predetermined number $L$ of most recent time steps. ($L$ can be any appropriate positive integer value, e.g., $L = 5$).

The planning neural network 200 is configured to process: (i) the planning embeddings 116 representing previous interactions of the agent with the environment, and (ii) a current observation 110 representing the current state of the environment, to generate an "implicit plan" 118 for accomplishing the goal of the agent. The implicit plan 118 is an embedding that can encode information about the current state of the environment (from the current observation 110), the history of the interaction of the agent with the environment (from the planning embeddings 116), and optionally, the goal to be accomplished by the agent (also from the planning embeddings 116).

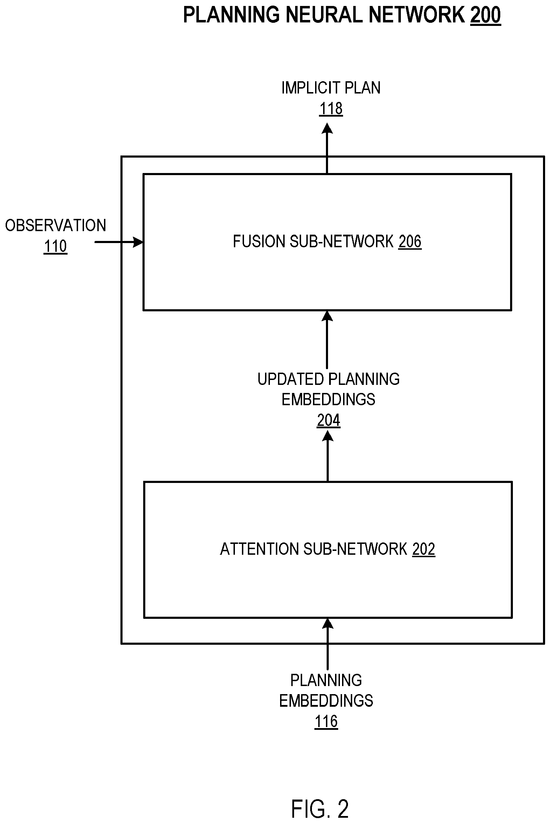

The planning neural network 200 can have any appropriate neural network architecture that enables it to perform its described functions. As part of generating the implicit plan 118 from the planning embeddings 116, the planning neural network 200 can enrich the planning embeddings by updating the planning embedding using self-attention operations. An example architecture of the planning neural network 200 is described in more detail with reference to FIG. 2.

The action selection neural network 120 is configured to process an input that includes the implicit plan 118 generated by the planning neural network 200 to generate an action selection output 122. Optionally, the action selection neural network 120 can process other data in addition to the implicit plan 118, e.g., the action selection neural network 120 can also process respective embeddings of one or more of: the current observation, the action performed at the previous time step, or the reward received at the previous time step. The action selection output 122 can include a respective score for each action in a set of possible actions that can be performed by the agent.

The system 100 selects the action 102 to be performed by the agent 104 at the time step using the action selection output 122 generated by the action selection neural network 120 at the time step. For example, the system 100 can select the action having the highest score, according to the action selection output 122, as the action to be performed by the agent at the time step. In some implementations, the system 100 selects the action to be performed by the agent in accordance with an exploration strategy. For example, the system 100 can use an $\varepsilon$-greedy exploration strategy. In this example, the system 100 can select the action having a highest score (according to the action selection output 122) with probability $1 - \varepsilon$, and select an action randomly with probability $\varepsilon$, where $\varepsilon$ is a number between 0 and 1.

The action selection neural network 120 can have any appropriate neural network architecture that enables it to perform its described functions. For example, the action selection neural network can include any appropriate neural network layers (e.g., convolutional layers, fully connected layers, attention layers, etc.) connected in any appropriate configuration (e.g., as a linear sequence of layers). In one example, the action selection neural network 120 can include: an input layer that is configured to receive the implicit plan 118, a linear sequence of multiple fully-connected layers, and an output layer that includes a respective neuron corresponding to each action in the set of possible actions that can be performed by the agent.

After the system 100 selects the action 102 to be performed by the agent 104 at the time step, the agent 104 interacts with the environment 106 by performing the action 102, and the system 100 can receive a reward 108 based on the interaction. The system 100 can generate an experience tuple characterizing the interaction of the agent with the environment at the time step, and store the experience tuple in the memory 114.

A training engine 112 can use the observations 110 and corresponding rewards 108 resulting from the interactions of the agent 104 with the environment 106 to train the action selection system 100 using reinforcement learning techniques. The training engine 112 trains the action selection system 100 by iteratively adjusting the parameters of the action selection neural network 120 and the planning neural network 200. The training engine 112 can adjust the parameters of the action selection system 100 by iteratively backpropagating gradients of a reinforcement learning objective function through the action selection system 100. By training the action selection system 100, the training engine 112 can cause the action selection system 100 to select actions that increase a cumulative measure of reward (e.g., a long-term time-discounted cumulative reward) received by the action selection system 100 and cause the agent to accomplish its goal more effectively (e.g., over fewer time steps).

FIG. 2 shows an example architecture of a planning neural network 200 that is included in the action selection system 100 described with reference to FIG. 1.

The planning neural network 200 is configured to process: (i) a set of planning embeddings 116 representing previous interactions of the agent with the environment, and (ii) a current observation 110 representing the current state of the environment, to generate an implicit plan 118 for accomplishing the goal of the agent.

The planning neural network 200 includes an attention sub-network 202 and a fusion sub-network 206, which will each be described in more detail next.

The attention sub-network 202 is configured to iteratively (i.e., at each of one or more iterations) update the planning embeddings 116 to generate updated planning embeddings 204. More specifically, the attention sub-network 202 iteratively updates the planning embeddings 116 by processing the planning embeddings 116 using a sequence of one or more "attention blocks." Each attention block is a collection of one or more neural network layers that is configured to receive a set of current planning embeddings, to update the current planning embeddings by applying attention operations to the current planning embeddings, and to output the updated planning embeddings. The first attention block can receive the initial planning embeddings 116, each subsequent attention block can receive the planning embeddings output by the preceding attention block, and the final attention block can output the updated planning embeddings 204 (i.e., that define the output of the attention sub-network 202).

Each attention block updates the planning embeddings by applying attention operations to the planning embeddings, in particular, by updating each planning embedding using self-attention over the planning embeddings. To update a given planning embedding using self-attention over the planning embeddings, the attention block can determine a respective "attention weight" between the given planning embedding and each planning embedding in the set of planning embeddings. The attention block can then update the given planning embedding using: (i) the attention weights, and (ii) the planning embeddings.

For example, if the planning embeddings 116 are denoted by $\{p_i\}_{i=1}^{N}$, where $N$ is the number of planning embeddings, then to update planning embedding $p_i$, an attention block can determine attention weights $\left[a_{i,j}\right]_{j=1}^{N}$ where $a_{i,j}$ denotes the attention weight between $p_i$ and $p_j$, as:

$$\left[a_{i,j}\right]_{j=1}^{N} = \text{softmax}\left(\frac{\left(W_q p_i\right)K^T}{c}\right) \quad (1)$$

$$K^T = \left[W_k p_j\right]_{j=1}^{N} \quad (2)$$

where $W_q$ and $W_k$ are learned parameter matrices, softmax(-) denotes a soft-max normalization operation, and $c$ is a constant. Using the attention weights, the attention block can update planning embedding $p_i$ as:

$$p_i \leftarrow \sum_{j=1..N} a_{i,j} \cdot \left(W_v p_j\right) \quad (3)$$

where $W_v$ is a learned parameter matrix. ($W_q p_i$ can be referred to as the "query embedding" for planning embedding $p_i$, $W_k p_j$ can be referred to as the "key embedding" for planning embedding $p_j$, and $W_v p_j$ can be referred to as the "value embedding" for planning embedding $p_j$). The parameter matrices $W_q$ (the "query embedding matrix"), $W_k$ (the "key embedding matrix"), and $W_v$ (the "value embedding matrix") are trainable parameters of the attention block. Generally, each attention block in the attention sub-network 202 can use query, key, and value embedding matrices with different parameter values to update the planning embeddings.

Optionally, each attention block can have multiple "heads" that each generate a respective updated planning embedding corresponding to each input planning embedding, i.e., such that each input planning embedding is associated with multiple updated planning embeddings. For example, each head may generate updated planning embeddings in accordance with different values of the parameter matrices $W_q$, $W_k$, and $W_v$ that are described with reference to equations (1)-(3). An attention block with multiple heads can implement a "gating" operation to combine the updated planning embeddings generated by the heads for an input planning embedding, i.e., to generate a single updated planning embedding corresponding to each input planning embedding. For example, the attention block can process the input planning embeddings using one or more neural network layers (e.g., fully connected neural network layers) to generate a respective gating value for each head. The attention block can then combine the updated planning embeddings corresponding to an input planning embedding in accordance with the gating values. For example, the attention block can generate the updated planning embedding for an input planning embedding $p_i$ as:

$$\sum_{k=1}^{K} \alpha_k \cdot p_i^{next} \qquad (4)$$

where $k$ indexes the heads, $\alpha_k$ is the gating value for head $k$, and $p_i^{next}$ is the updated planning embedding generated by head $k$ for input planning embedding $p_i$. The attention operations described with reference to equations (1)-(4) can be referred as "multi-head key-query-value attention operations."

By updating the planning embeddings 116 using self-attention operations, the planning neural network 200 uses learned operations to share information amongst the planning embeddings 116 and thereby enrich each planning embedding with information content from the other planning embeddings. Enriching the information content of the planning embeddings 116 can enable the planning neural network 200 to generate more informative implicit plans 118 that enable the agent to accomplish goals in the environment more efficiently, e.g., over fewer time steps.

In some implementations, as described with reference to FIG. 1, the action selection system 100 generates planning embeddings 116 corresponding to only a proper subset of the experience tuples stored in the memory, e.g., for only the experience tuples corresponding to the $L$ most recent time steps. To enable the planning system 100 to incorporate information from all the stored experience tuples (i.e., in addition to only the $L$ most recent experience tuples), the action selection system 100 can generate a respective "static" embedding corresponding to each experience tuple stored in the memory. The action selection system 100 can generate a static embedding corresponding to an experience tuple, e.g., by concatenating an embedding of a goal observation to the experience tuple. After generating the static embeddings for the experience tuples stored in the memory, the action selection system 100 can then provide the static embeddings to the planning system 100 in addition to the planning embeddings 116.

Each attention block of the attention sub-network 202 can update the planning embeddings using cross-attention over the static embeddings, in addition to using self-attention over the planning embeddings themselves (as described above). For example, each attention block can first update the planning embeddings using cross-attention over the static embeddings, and then update the planning embeddings using self-attention over the planning embeddings. Generally, the attention blocks of the attention sub-network 202 do not update the static embeddings, i.e., such that the static embeddings remain fixed even as the planning embeddings are updated by each attention block of the attention sub-network 202.

To update a given planning embedding using cross-attention over the static embeddings, an attention block can determine a respective attention weight between the given planning embedding and each static embedding. The attention block can then update the given planning embedding using: (i) the attention weights, and (ii) the static embeddings. For example, if the planning embeddings 116 are denoted by $\{p_i\}_{i=1}^{L}$ and the static embeddings are denoted by $\{s_j\}_{j=1}^{M}$, then to update planning embedding $p_i$, an attention block can determine attention weights $[a_{i,j}]_{j=1}^{M}$ where $a_{i,j}$ denotes the attention weight between $p_i$ and $s_j$, as:

$$[a_{i,j}]_{j=1}^{M} = \text{softmax}\left(\frac{(W_q p_i)K^T}{c}\right) \qquad (5)$$

$$K^T = \left[ W_k s_j \right]_{j=1}^{M} \quad (6)$$

where $W_q$ and $W_k$ are learned parameter matrices, softmax(-) denotes a soft-max normalization operation, and $c$ is a constant. Using the attention weights, the attention block can update planning embedding $p_i$ as:

$$p_i \leftarrow \sum_{j=1..M} a_{i,j} \cdot (W_v s_j) \quad (7)$$

where $W_v$ is a learned parameter matrix. Optionally, the attention block can have multiple heads that generate multiple updated planning embeddings corresponding to each input planning embedding using cross-attention over the static embeddings. The attention block can combine the multiple updated planning embeddings corresponding to each input planning embedding to generate a single updated planning embedding corresponding to each input planning embedding, as described above.

By updating the planning embeddings 116 using cross-attention over static embeddings for every experience tuple in the external memory, the planning neural network 200 can efficiently capture information from all of the previous interactions of the agent with environment and thereby generate a more informative implicit plan. The action selection system can use the more informative implicit plan to select actions that enable the agent to accomplish goals in the environment more effectively, e.g., over fewer time steps. By refraining from updating the static embeddings, e.g., using attention operations, the planning neural network can significantly reduce consumption of computational resources (e.g., memory and computing power).

Each attention block can implement any other appropriate neural network operations in addition to the attention operations described above to update the current planning embeddings. For example, each attention block can be a residual block that processes current planning embeddings $B_i$ to generate updated planning embeddings $B_{i+1}$ as follows:

$$B_{i+1} = f\left( B_i + \mathrm{MHA}\left( \mathrm{LayerNorm}(B_i) \right) \right) \quad (8)$$

where LayerNorm($\cdot$) denotes a layer normalization operation, MHA($\cdot$) denotes a multi-head attention operation (including self-attention over the planning embeddings $B_i$, and optionally, cross attention over the static embeddings), and $f(\cdot)$ denotes a linear projection operation.

The fusion sub-network 206 is configured to process: (i) the updated planning embeddings 204, and (ii) the current observation 110, to generate the implicit plan 118 for accomplishing the goal. Generally, the fusion sub-network 206 can have any appropriate neural network architecture that enables it to perform its described function, including any appropriate neural network layers (e.g., convolutional layers or fully-connected layers) connected in any appropriate configuration (e.g., as a linear sequence of layers).

For example, to generate the implicit plan 118, the fusion sub-network 206 can generate an embedding of the current observation 110, e.g., by processing the current observation 110 using an embedding neural network. The fusion sub-network 206 can then append (concatenate) the embedding of the current observation 110 to each updated planning embedding 204 to generate a respective "combined" embedding corresponding to each updated planning embedding 204. The fusion sub-network 206 can process each combined embedding using one or more neural network layers (e.g., fully-connected layers) to generate a respective "transformed" embedding corresponding to each updated planning embedding 204. The fusion sub-network 206 can generate the implicit plan by applying a pooling operation to the transformed embeddings. The pooling operation can be any appropriate operation that, when applied to the transformed embeddings, generates an implicit plan having a dimensionality that is independent of the number of transformed embeddings. For example, the pooling operation can be a feature-wise max pooling operation, i.e., where the implicit plan is defined as having the same dimensionality as each transformed embedding, and each entry of the implicit plan is defined as the maximum of the corresponding entries of the transformed embeddings.

The parameters of the planning neural network 200, including the parameters of the attention sub-network 202 (including its constituent attention blocks) and the fusion sub-network 206, are jointly trained along with the parameters of the action selection neural network 120 by a training engine using reinforcement learning techniques (as described with reference to FIG. 1). In particular, the gradients of a reinforcement learning objective function are backpropagated through the action selection neural network and into the fusion sub-network and the attention sub-network of the planning neural network. These gradients are used to adapt the parameters of the planning neural network to enable the generation of implicit plans encoding information that, when processed by the action selection neural network, result in the selection of actions that allow the agent to effectively accomplish goals in the environment.

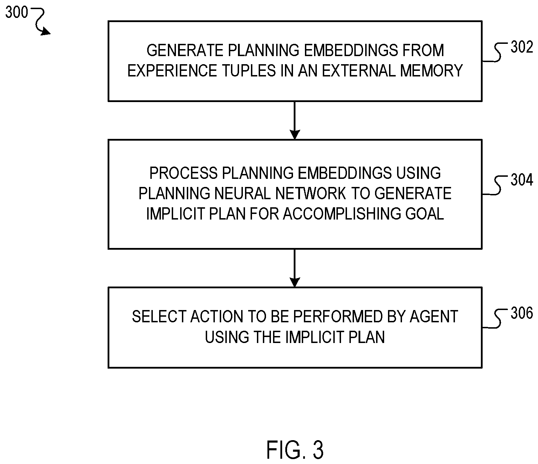

FIG. 3 is a flow diagram of an example process 300 for selecting actions to be performed by an agent interacting with an environment to accomplish a goal. For convenience, the process 300 will be described as being performed by a system of one or more computers located in one or more locations. For example, an action selection system, e.g., the action selection system 100 of FIG. 1, appropriately programmed in accordance with this specification, can perform the process 300.

The system generates a respective planning embedding corresponding to each of multiple experience tuples in an external memory (302). Each experience tuple characterizes interaction of the agent with the environment at a respective previous time step.

The system processes the planning embeddings using a planning neural network to generate an implicit plan for accomplishing the goal (304).

The system selects the action to be performed by the agent at the time step using the implicit plan (306).

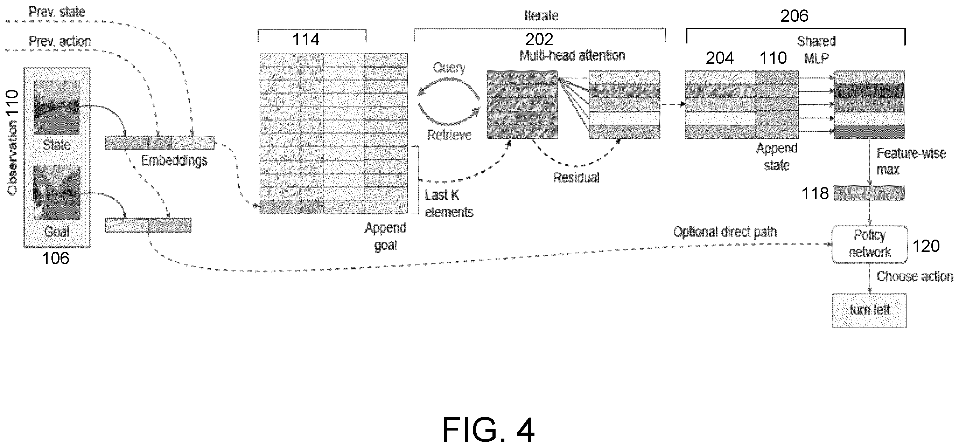

FIG. 4 a schematic illustration of an example of the system of FIG. 1, in which like elements to those previously described are indicated by like reference numerals.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. The embodiments are within the scope of the following claims.

**Claims**

1.　A method performed by one or more data processing apparatus (100) for selecting actions (102) to be performed by an agent (104) interacting with an environment (106) to accomplish a goal, the method comprising:

generating a respective planning embedding (116) corresponding to each of multiple experience tuples in an external memory (114), wherein each experience tuple characterizes interaction of the agent with the environment at a respective previous time step, wherein generating the respective planning embedding comprises appending a representation of a goal state of the environment to the experience tuple, and wherein the goal state represents a state of the environment when the goal of the agent has been accomplished;
processing the planning embeddings using a planning neural network (200) to generate an implicit plan (118) for accomplishing the goal; and
selecting the action to be performed by the agent at the time step using the implicit plan; and wherein

i) the agent is a mechanical agent and the environment is a real-world environment, and the actions include control signals for actions of the mechanical agent in the real-world environment to accomplish the goal, or
ii) the environment is a real-world environment including items of equipment in a plant or facility and the agent controls actions in the environment, the actions controlling or imposing operating conditions on the items of equipment of the plant/facility, or
iii) the environment is a real-world environment and the agent manages distribution of tasks across computing resources in the environment, and the actions include assigning tasks to particular computing resources.

2. The method of claim 1, wherein processing the planning embeddings using a planning neural network to generate an implicit plan for accomplishing the goal comprises:

iteratively updating the planning embeddings, comprising, at each of a plurality of iterations, updating each planning embedding using attention over the planning embeddings; and
generating the implicit plan using the planning embeddings.

3. The method of claim 2, further comprising generating a respective static embedding corresponding to each of multiple experience tuples in the external memory;
wherein iteratively updating the planning embeddings further comprises, at each of the plurality of iterations:
updating each planning embedding using attention over the static embeddings.

4. The method of claim 3, wherein:

generating a respective planning embedding corresponding to each of multiple experience tuples in the external memory comprises:
generating a respective planning embedding only for experience tuples in the external memory characterizing interaction of the agent with the environment over a predetermined number of most recent time steps; and
generating a respective static embedding corresponding to each of multiple experience tuples in the external memory comprises:
generating a respective static embedding for every experience tuple in the external memory.

5. The method of any one of claims 2-4, wherein updating each planning embedding using attention over the planning embeddings comprises:
processing the planning embeddings using a residual neural network block that is configured to apply a sequence of operations to the planning embeddings, the sequence of operations comprising: (i) a layer normalization operation, (ii) an attention operation, and (iii) a linear projection operation; in particular wherein the attention operation comprises a multi-head key-query-value attention operation over the planning embeddings.

6. The method of any one of claims 2-5, wherein generating the implicit plan using the planning embeddings comprises:
generating the implicit plan based on: (i) the planning embeddings, and (ii) a current observation characterizing a current state of the environment.

7. The method of claim 6, wherein generating the implicit plan based on: (i) the planning embeddings, and (ii) a current observation characterizing a current state of the environment comprises:

for each planning embedding:

appending a representation of the current observation (110) to the planning embedding to generate a combined embedding; and
processing the combined embedding by one or more neural network layers to generate a transformed embedding; and

generating the implicit plan based on the transformed embeddings.

8. The method of claim 7, wherein generating the implicit plan based on the transformed embeddings comprises: generating the implicit plan by applying a pooling operation to the transformed embeddings; in particular wherein the pooling operation is a feature-wise max pooling operation.

9. The method of any one of claims 1-8, wherein selecting the action (102) to be performed by the agent at the time step using the implicit plan comprises:

processing an input comprising the implicit plan using an action selection neural network (120) to generate an action selection output; and
selecting the action based on the action selection output; in particular
wherein the action selection output comprises a respective score for each action in a set of possible actions that can be performed by the agent, and selecting the action based on the action selection output comprises sampling an action in accordance with the action scores.

10. The method of claim 9, wherein the action selection neural network and the planning neural network are trained using reinforcement learning techniques to maximize a cumulative measure of reward received by the agent by interacting with the environment.

11. The method of any one of claims 1-10, wherein each experience tuple comprises: (i) a representation of an observation characterizing a state of the environment at the respective previous time step, (ii) a representation of an action performed by the agent at the respective previous time step, and (iii) a representation of an observation characterizing the state of the environment after the agent performed the action at the respective previous time step.

12. The method of any one of claims 1-11, further comprising, after selecting the action to be performed by the agent at the time step using the implicit plan, storing an experience tuple in the external memory that characterizes interaction of the agent with the environment at a current time step.

13. The method of any one of claims 1-12, wherein the planning embedding does not include a representation of a current observation characterizing a current state of the environment

14. A system comprising:

one or more computers; and
one or more storage devices communicatively coupled to the one or more computers, wherein the one or more storage devices store instructions that, when executed by the one or more computers, cause the one or more computers to perform the method of any one of claims 1-13.

15. One or more non-transitory computer storage media storing instructions that when executed by one or more computers cause the one or more computers to perform the method of any one of claims 1-13.

**Patentansprüche**

1. Verfahren, das durch eine oder mehrere Datenverarbeitungsvorrichtungen (100) zum Auswählen von Aktionen (102) durchgeführt wird, die durch einen Agenten (104), der mit einer Umgebung (106) interagiert, zum Erreichen eines Ziels durchzuführen sind, wobei das Verfahren Folgendes umfasst:

Erzeugen einer jeweiligen Planungseinbettung (116), die jedem von mehreren Erfahrungstupeln in einem externen Speicher (114) entspricht, wobei jedes Erfahrungstupel eine Interaktion des Agenten mit der Umgebung zu einem jeweiligen vorherigen Zeitschritt kennzeichnet, wobei das Erzeugen der jeweiligen Planungseinbettung Anhängen einer Darstellung eines Zielzustands der Umgebung an das Erfahrungstupel umfasst, und wobei der Zielzustand einen Zustand der Umgebung darstellt, wenn das Ziel des Agenten erreicht wurde;
Verarbeiten der Planungseinbettungen unter Verwendung eines neuronalen Planungsnetzes (200), um einen impliziten Plan (118) zum Erreichen des Ziels zu erzeugen; und

Auswählen der Aktion, die durch den Agenten zu dem Zeitschritt unter Verwendung des impliziten Plans durchzuführen ist; und
wobei

i) der Agent ein mechanischer Agent ist und die Umgebung eine reale Umgebung ist und die Aktionen Steuersignale für Aktionen des mechanischen Agenten in der realen Umgebung zum Erreichen des Ziels beinhalten oder
ii) die Umgebung eine reale Umgebung ist, die Ausrüstungsgegenstände in einer Fabrik oder Anlage beinhaltet, und der Agent Aktionen in der Umgebung steuert, wobei die Aktionen Betriebsbedingungen an den Ausrüstungsgegenständen der Fabrik/Anlage steuern oder festlegen, oder
iii) die Umgebung eine reale Umgebung ist und der Agent die Verteilung von Aufgaben über Rechenressourcen in der Umgebung verwaltet und die Aktionen Zuweisen von Aufgaben zu konkreten Rechenressourcen beinhalten.

2. Verfahren nach Anspruch 1, wobei das Verarbeiten der Planungseinbettungen unter Verwendung eines neuronalen Planungsnetzes zum Erzeugen eines impliziten Plans zum Erreichen des Ziels Folgendes umfasst:

iteratives Aktualisieren der Planungseinbettungen, umfassend Aktualisieren jeder Planungseinbettung unter Verwendung von Aufmerksamkeit über den Planungseinbettungen bei jeder einer Vielzahl von Iterationen; und
Erzeugen des impliziten Plans unter Verwendung der Planungseinbettungen.

3. Verfahren nach Anspruch 2, ferner umfassend Erzeugen einer jeweiligen statischen Einbettung, die jedem von mehreren Erfahrungstupeln in dem externen Speicher entspricht;
wobei das iterative Aktualisieren der Planungseinbettungen ferner bei jeder der Vielzahl von Iterationen Folgendes umfasst: Aktualisieren jeder Planungseinbettung unter Verwendung von Aufmerksamkeit über den statischen Einbettungen.

4. Verfahren nach Anspruch 3, wobei:
das Erzeugen einer jeweiligen Planungseinbettung, die jedem von mehreren Erfahrungstupeln in dem externen Speicher entspricht, Folgendes umfasst:

Erzeugen einer jeweiligen Planungseinbettung nur für Erfahrungstupel in dem externen Speicher, die eine Interaktion des Agenten mit der Umgebung über eine vorbestimmte Anzahl von letzten Zeitschritten kennzeichnen; und
das Erzeugen einer jeweiligen statischen Einbettung, die jedem von mehreren Erfahrungstupeln in dem externen Speicher entspricht, Folgendes umfasst:
Erzeugen einer jeweiligen statischen Einbettung für jedes Erfahrungstupel in dem externen Speicher.

5. Verfahren nach einem der Ansprüche 2-4, wobei das Aktualisieren jeder Planungseinbettung unter Verwendung von Aufmerksamkeit über den Planungseinbettungen Folgendes umfasst: Verarbeiten der Planungseinbettungen unter Verwendung eines verbleibenden Blocks des neuronalen Netzes, der dazu konfiguriert ist, eine Sequenz von Operationen auf die Planungseinbettungen anzuwenden, wobei die Sequenz von Operationen Folgendes umfasst: (i) eine Schichtnormalisierungsoperation, (ii) eine Aufmerksamkeitsoperation und (iii) eine lineare Projektionsoperation; wobei insbesondere die Aufmerksamkeitsoperation eine Multi-Head-Schlüssel-Abfrage-Wert-Aufmerksamkeitsoperation über den Planungseinbettungen umfasst.

6. Verfahren nach einem der Ansprüche 2-5, wobei das Erzeugen des impliziten Plans unter Verwendung der Planungseinbettungen Folgendes umfasst:
Erzeugen des impliziten Plans auf Grundlage: (i) der Planungseinbettungen und (ii) einer aktuellen Beobachtung, die einen aktuellen Zustand der Umgebung kennzeichnet.

7. Verfahren nach Anspruch 6, wobei das Erzeugen des impliziten Plans auf Grundlage: (i) der Planungseinbettungen und (ii) einer aktuellen Beobachtung, die einen aktuellen Zustand der Umgebung kennzeichnet, Folgendes umfasst:
für jede Planungseinbettung:

Anhängen einer Darstellung der aktuellen Beobachtung (110) an die Planungseinbettung, um eine kombinierte Einbettung zu erzeugen; und
Verarbeiten der kombinierten Einbettung durch eine oder mehrere Schichten des neuronalen Netzes, um eine transformierte Einbettung zu erzeugen; und

Erzeugen des impliziten Plans auf Grundlage der transformierten Einbettungen.

8. Verfahren nach Anspruch 7, wobei das Erzeugen des impliziten Plans auf Grundlage der transformierten Einbettungen Folgendes umfasst:

Erzeugen des impliziten Plans durch Anwenden einer Pooling-Operation auf die transformierten Einbettungen; wobei die Pooling-Operation insbesondere eine merkmalmäßige Max-Pooling-Operation ist.

9. Verfahren nach einem der Ansprüche 1-8, wobei das Auswählen der Aktion (102), die durch den Agenten zu dem Zeitschritt unter Verwendung des impliziten Plans durchzuführen ist, Folgendes umfasst:

Verarbeiten einer Eingabe, die den impliziten Plan umfasst, unter Verwendung eines neuronalen Aktionsauswahlnetzes (120), um eine Aktionsauswahlausgabe zu erzeugen; und

Auswählen der Aktion auf Grundlage der Aktionsauswahlausgabe; insbesondere

wobei die Aktionsauswahlausgabe eine jeweilige Bewertung für jede Aktion in einem Satz möglicher Aktionen umfasst, die durch den Agenten durchgeführt werden können, und das Auswählen der Aktion auf Grundlage der Aktionsauswahlausgabe Abtasten einer Aktion gemäß den Aktionsbewertungen umfasst.

10. Verfahren nach Anspruch 9, wobei das neuronale Aktionsauswahlnetz und das neuronale Planungsnetz unter Verwendung von Verstärkungs-Lerntechniken trainiert werden, um ein kumulatives Maß der Belohnung, die durch den Agenten durch Interaktion mit der Umgebung empfangen wird, zu maximieren.

11. Verfahren nach einem der Ansprüche 1-10, wobei jedes Erfahrungstupel Folgendes umfasst: (i) eine Darstellung einer Beobachtung, die einen Zustand der Umgebung zu dem jeweiligen vorherigen Zeitschritt kennzeichnet, (ii) eine Darstellung einer Aktion, die durch den Agenten zu dem jeweiligen vorherigen Zeitschritt durchgeführt wird, und (iii) eine Darstellung einer Beobachtung, die den Zustand der Umgebung kennzeichnet, nachdem der Agent die Aktion zu dem jeweiligen vorherigen Zeitschritt durchgeführt hat.

12. Verfahren nach einem der Ansprüche 1-11, ferner umfassend, nach dem Auswählen der Aktion, die durch den Agenten zu dem Zeitschritt unter Verwendung des impliziten Plans durchzuführen ist, Speichern eines Erfahrungstupels in dem externen Speicher, das die Interaktion des Agenten mit der Umgebung zu einem aktuellen Zeitschritt kennzeichnet.

13. Verfahren nach einem der Ansprüche 1-12, wobei die Planungseinbettung keine Darstellung einer aktuellen Beobachtung, die einen aktuellen Zustand der Umgebung kennzeichnet, beinhaltet.

14. System, umfassend:

einen oder mehrere Computer; und

eine oder mehrere Speichervorrichtungen, die kommunikativ an den einen oder die mehreren Computer gekoppelt sind, wobei die eine oder mehreren Speichervorrichtungen Anweisungen speichern, die bei Ausführung durch den einen oder die mehreren Computer den einen oder die mehreren Computer dazu veranlassen, das Verfahren nach einem der Ansprüche 1-13 durchzuführen.

15. Ein oder mehrere nicht-transitorische Computerspeichermedien, die Anweisungen speichern, die bei Ausführung durch einen oder mehrere Computer den einen oder die mehreren Computer dazu veranlassen, das Verfahren nach einem der Ansprüche 1-13 durchzuführen.

**Revendications**

1. Procédé réalisé par un ou plusieurs appareils de traitement de données (100) pour sélectionner des actions (102) à réaliser par un agent (104) interagissant avec un environnement (106) pour atteindre un objectif, le procédé comprenant :

la génération d'une intégration de planification respective (116) correspondant à chacun parmi de multiples tuples d'expérience dans une mémoire externe (114), dans lequel chaque tuple d'expérience caractérise l'interaction de l'agent avec l'environnement à un pas de temps précédent respectif, dans lequel la génération de l'intégration de planification respective comprend l'ajout d'une représentation d'un état d'objectif de l'environnement au tuple d'expérience, et dans lequel l'état d'objectif représente un état de l'environnement lorsque l'objectif de l'agent a été accompli ;

le traitement des intégrations de planification à l'aide d'un réseau neuronal de planification (200) pour générer un plan implicite (118) pour accomplir l'objectif ; et

la sélection de l'action à réaliser par l'agent au pas de temps à l'aide du plan implicite ; et dans lequel

> i) l'agent est un agent mécanique et l'environnement est un environnement réel, et les actions comprennent des signaux de commande pour des actions de l'agent mécanique dans l'environnement réel pour accomplir l'objectif, ou
>
> ii) l'environnement est un environnement réel comprenant des pièces d'équipement dans une usine ou une installation et l'agent commande des actions dans l'environnement, les actions commandant ou imposant des conditions de fonctionnement aux pièces d'équipement de l'usine ou de l'installation, ou
>
> iii) l'environnement est un environnement réel et l'agent gère la distribution de tâches parmi des ressources informatiques dans l'environnement, et les actions comprennent l'attribution de tâches à des ressources informatiques particulières.

**2.** Procédé selon la revendication 1, dans lequel le traitement des intégrations de planification à l'aide d'un réseau neuronal de planification pour générer un plan implicite pour accomplir l'objectif comprend :

> la mise à jour itérative des intégrations de planification, comprenant, à chacune d'une pluralité d'itérations, la mise à jour de chaque intégration de planification à l'aide d'une attention sur les intégrations de planification ; et
> la génération du plan implicite à l'aide des intégrations de planification.

**3.** Procédé selon la revendication 2, comprenant également la génération d'une intégration statique respective correspondant à chacun parmi de multiples tuples d'expérience dans la mémoire externe ;
dans lequel la mise à jour itérative des intégrations de planification comprend également, à chacune de la pluralité d'itérations :
la mise à jour de chaque intégration de planification à l'aide d'une attention sur les intégrations statiques.

**4.** Procédé selon la revendication 3, dans lequel :
la génération d'une intégration de planification respective correspondant à chacun parmi de multiples tuples d'expérience dans la mémoire externe comprend :

> la génération d'une intégration de planification respective uniquement pour des tuples d'expérience dans la mémoire externe caractérisant une interaction de l'agent avec l'environnement sur un nombre prédéterminé de pas de temps les plus récents ; et
> la génération d'une intégration statique respective correspondant à chacun parmi de multiples tuples d'expérience dans la mémoire externe comprend :
> la génération d'une intégration statique respective pour chaque tuple d'expérience dans la mémoire externe.

**5.** Procédé selon l'une quelconque des revendications 2 à 4, dans lequel la mise à jour de chaque intégration de planification à l'aide d'une attention sur les intégrations de planification comprend :
le traitement des intégrations de planification à l'aide d'un bloc de réseau neuronal résiduel qui est configuré pour appliquer une séquence d'opérations aux intégrations de planification, la séquence d'opérations comprenant : (i) une opération de normalisation de couche, (ii) une opération d'attention, et (iii) une opération de projection linéaire ;
en particulier, dans lequel l'opération d'attention comprend une opération d'attention de valeur de requête clé multi-tête sur les intégrations de planification.

**6.** Procédé selon l'une quelconque des revendications 2 à 5, dans lequel la génération du plan implicite à l'aide des intégrations de planification comprend :
la génération du plan implicite sur la base : (i) des intégrations de planification, et (ii) d'une observation actuelle caractérisant un état actuel de l'environnement.

**7.** Procédé selon la revendication 6, dans lequel la génération du plan implicite sur la base : (i) des intégrations de planification, et (ii) d'une observation actuelle caractérisant un état actuel de l'environnement comprend :
pour chaque intégration de planification :

l'ajout d'une représentation de l'observation actuelle (110) à l'intégration de planification pour générer une intégration combinée ; et

le traitement de l'intégration combinée par une ou plusieurs couches de réseau neuronal pour générer une intégration transformée ; et

la génération du plan implicite sur la base des intégrations transformées.

8. Procédé selon la revendication 7, dans lequel la génération du plan implicite sur la base des intégrations transformées comprend :

la génération du plan implicite en appliquant une opération de mise en commun aux intégrations transformées ; en particulier dans lequel l'opération de mise en commun est une opération de mise en commun maximale par caractéristique.

9. Procédé selon l'une quelconque des revendications 1 à 8, dans lequel la sélection de l'action (102) à réaliser par l'agent au pas de temps à l'aide du plan implicite comprend :

le traitement d'une entrée comprenant le plan implicite à l'aide d'un réseau neuronal de sélection d'action (120) pour générer une sortie de sélection d'action ; et

la sélection de l'action sur la base de la sortie de sélection d'action ; en particulier

dans lequel la sortie de sélection d'action comprend un score respectif pour chaque action dans un ensemble d'actions possibles qui peuvent être réalisées par l'agent, et la sélection de l'action sur la base de la sortie de sélection d'action comprend l'échantillonnage d'une action selon les scores d'action.

10. Procédé selon la revendication 9, dans lequel le réseau neuronal de sélection d'action et le réseau neuronal de planification sont formés à l'aide de techniques d'apprentissage par renforcement pour maximiser une mesure cumulée de récompense reçue par l'agent par interaction avec l'environnement.

11. Procédé selon l'une quelconque des revendications 1 à 10, dans lequel chaque tuple d'expérience comprend : (i) une représentation d'une observation caractérisant un état de l'environnement au pas de temps précédent respectif, (ii) une représentation d'une action réalisée par l'agent au pas de temps précédent respectif, et (iii) une représentation d'une observation caractérisant l'état de l'environnement après que l'agent a réalisé l'action au pas de temps précédent respectif.

12. Procédé selon l'une quelconque des revendications 1 à 11, comprenant également, après la sélection de l'action à réaliser par l'agent au pas de temps à l'aide du plan implicite, le stockage d'un tuple d'expérience dans la mémoire externe qui caractérise l'interaction de l'agent avec l'environnement à un pas de temps actuel.

13. Procédé selon l'une quelconque des revendications 1 à 12, dans lequel l'intégration de planification ne comprend pas de représentation d'une observation actuelle caractérisant un état actuel de l'environnement

14. Système comprenant :

un ou plusieurs ordinateurs ; et

un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser le procédé selon l'une quelconque des revendications 1 à 13.

15. Un ou plusieurs supports de stockage informatiques non transitoires stockant des instructions qui, lorsqu'elles sont exécutées par un ou plusieurs ordinateurs, amènent les un ou plusieurs ordinateurs à réaliser le procédé selon l'une quelconque des revendications 1 à 13.

**ACTION SELECTION SYSTEM 100**

ACTION SELECTION
OUTPUT
122

ACTION
102

AGENT 104

ENVIRONMENT 106

ACTION SELECTION
NEURAL NETWORK
120

IMPLICIT PLAN
118

REWARD
108

OBSERVATION
110

PLANNING NEURAL
NETWORK 200

TRAINING
ENGINE 112

PLANNING
EMBEDDINGS
116

EXTERNAL
MEMORY
114

FIG. 1

## PLANNING NEURAL NETWORK 200

IMPLICIT PLAN
118

OBSERVATION
110

FUSION SUB-NETWORK 206

UPDATED PLANNING
EMBEDDINGS
204

ATTENTION SUB-NETWORK 202

PLANNING
EMBEDDINGS
116

FIG. 2

300

```
┌─────────────────────────────────────────┐
│   GENERATE PLANNING EMBEDDINGS FROM      │── 302
│   EXPERIENCE TUPLES IN AN EXTERNAL MEMORY│
└─────────────────────────────────────────┘
                    │
                    ▼
┌─────────────────────────────────────────┐
│   PROCESS PLANNING EMBEDDINGS USING      │── 304
│   PLANNING NEURAL NETWORK TO GENERATE    │
│   IMPLICIT PLAN FOR ACCOMPLISHING GOAL   │
└─────────────────────────────────────────┘
                    │
                    ▼
┌─────────────────────────────────────────┐
│   SELECT ACTION TO BE PERFORMED BY AGENT │── 306
│   USING THE IMPLICIT PLAN                │
└─────────────────────────────────────────┘
```

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FANG et al.** Scene Memory Transformer for Embodied Agents in Long-Horizon Tasks. *arXiv:1903.03878v1*